(19) Europäisches Patentamt
European Patent Office
Office européen des brevets

(11) Veröffentlichungsnummer: **0 161 453**
**B1**

(12) # EUROPÄISCHE PATENTSCHRIFT

(45) Veröffentlichungstag der Patentschrift: **29.06.88**

(51) Int. Cl.⁴: **C 08 G 65/40**

(21) Anmeldenummer: **85103939.6**

(22) Anmeldetag: **01.04.85**

(54) **Temperaturbeständige aromatische Polyether.**

(30) Priorität: **14.04.84 DE 3414144**

(43) Veröffentlichungstag der Anmeldung: **21.11.85 Patentblatt 85/47**

(45) Bekanntmachung des Hinweises auf die Patenterteilung: **29.06.88 Patentblatt 88/26**

(84) Benannte Vertragsstaaten: **BE DE FR GB IT NL**

(56) Entgegenhaltungen:
**EP-A-0 121 257**
**EP-A-0 147 708**
**BE-A-679 200**
**DE-A-2 305 413**
**DE-A-2 434 790**
**US-A-4 246 397**

(73) Patentinhaber: **BASF Aktiengesellschaft, Carl-Bosch- Strasse 38, D-6700 Ludwigshafen (DE)**

(72) Erfinder: **Zeiner, Hartmut, Dr., Jolhann- Strauss-Strasse 13, D-6831 Plankstadt (DE)**
Erfinder: **Heinz, Gerhard, Dr., Im Vogelsang 2, D-6719 Weisenheim (DE)**
Erfinder: **Neumann, Peter, Dr., Franz- Schubert-Strasse 1, D-6908 Wiesloch (DE)**
Erfinder: **Bender, Herbert, Dr., Koenigsberger Strasse 5, D-6737 Boehl- Iggelheim (DE)**
Erfinder: **Fischer, Juergen, Dr., Thomas- Mann-Strasse 62, D-6700 Ludwigshafen (DE)**
Erfinder: **Thomas, Michael, Dr., Am Wingertsberg 4, D-6719 Weisenheim (DE)**

**EP 0 161 453 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung betrifft vernetzbare temperaturbeständige aromatische Polyether auf Basis von Diphenolen und einkernigen aromatischen Halogenverbindungen, die mindestens zwei Halogensubstituenten enthalten.

In den DE-A 1 544 106 und 1 957 091 sind Verfahren zur Herstellung von temperaturbeständigen aromatischen Polyethern durch Polykondensation von Bisphenolen und vorzugsweise zweikernigen Dihalogenbenzolverbindungen mit einer Elektronen abziehenden Gruppe in o- oder p-Stellung zu den Halogenatomen beschrieben.

In der nicht vorveröffentlichten EP-A 121 257 werden Polyarylnitrilpolymere auf der Basis von Dihydroxyverbindungen

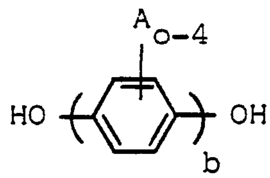

und Verbindungen der Formel

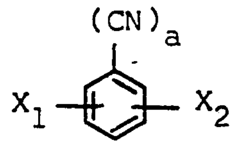

beschrieben, wobei

A ein Wasserstoffatom, eine $C_1$-$C_4$-Alkyl- oder Alkoxygruppe oder ein Halogenatom ist,

b eine ganze Zahl von 1 bis 3 und

a eine ganze Zahl von 1 bis 2 ist.

In der DE-A 2 434 790 werden Polyether auf der Basis von Diphenolen und einkernigen aromatischen Halogenverbindungen mit mindestens zwei Halogensubstituenten beschrieben, wobei die Halogenverbindungen mindestens eine elektronenanziehende Gruppe und zusätzlich ein Heterostickstoffatom oder mindestens eine Nitrilgruppe enthalten. Darüber hinaus enthalten die Halogenverbindungen zwingend eine Azidgruppe, da dadurch erst die in der DE-A 2 434 790 angestrebte Lichtempfindlichkeit der Produkte erreicht wird.

Für viele Anwendungszwecke müssen hochtemperaturbeständige Kunststoffe in Form von Lösungen in niedrigsiedenden organischen Lösungsmitteln eingesetzt werden, beispielsweise bei der Herstellung von Gießfolien. Damit scheiden viele Stoff-Klassen, wie Polyetherketone und Polyarylensulfide, die unlöslich sind, von vornherein für diese Anwendungszwecke aus. Andere Polyether, wie Polyethersulfone sind zwar löslich; daraus hergestellte Formteile haben jedoch den Nachteil, daß sie nicht lösungsmittelbeständig und spannungsrißbeständig sind, was insbesondere ihren Einsatz im Automobilsektor einschränkt.

Der Erfindung lag nun die Aufgabe zugrunde, aromatische Polyether bereitzustellen, welche diese Nachteile nicht aufweisen.

Diese Aufgabe wird durch die erfindungsgemäßen aromatischen Polyether gemäß Anspruch 1 gelöst. Diese sind einerseits löslich und andererseits zu lösungsmittelbeständigen und hochtemperaturbeständigen Kunststoffen vernetzbar. Die Polyester sind aus Diphenolen der allgemeinen Formel I und einkernigen aromatischen Halogenverbindungen der allgemeinen Formeln II - VIII mit mindestens zwei Halogensubstituenten aufgebaut. Diese enthalten mindestens eine elektronenanziehende Gruppe und darüber hinaus als weitere funktionelle Gruppe

a) mindestens ein Heterostickstoffatom,

b) mindestens ein Heteroschwefelatom,

c) mindestens eine Nitrilgruppe oder

d) mindestens eine Alkylthio- oder Arylthiogruppe

wobe mindestens zwei Halogensubstituenten in ortho- oder ortho/para-Stellung zu einer elektronenanziehenden Gruppe stehen. Die elektronenanziehende Gruppe aktiviert die ortho- bzw. paraständigen Halogenatome und befähigt so die Halogenverbindung zur nucleophilen Polykondensation mit dem Diphenol. Die weitere funktionelle Gruppe im Molekül der aromatischen Halogenverbindung kann mit zur Löslichkeit des Polyethers und zu seiner Vernetzbarkeit beitragen.

Elektronenanziehende Gruppen im Sinne der Erfindung sind: Nitril-, Nitro-, Trifluormethyl-, Alkylsulfonyl- und

Arylsulfonyl-Gruppen, sowie ein Heterostickstoffatom im aromatischen Kern. Bevorzugt sind die Gruppen -CN und -N=.

An dieser Stelle sei darauf hingewiesen, daß die Dihalogenverbindung selbstverständlich neben den zwei für die Polykondensationsreaktion notwendigen Halogensubstituenten noch weitere Halogenatome enthalten kann. Einkernig im Sinne der Erfindung bedeutet, daß die bei der nucleophilen Substitution abgespaltenen Halogenatome an einen aromatischen Ring gebunden sind. Die Anwesenheit eines weiteren aromatischen Rings ohne substituierbare Halogenatome soll nicht ausgeschlossen sein.

Die Diphenole sind solche der allgemeinen Formel I

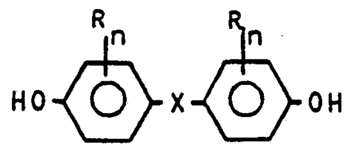 (I)

wobei die Symbole folgende Bedeutung haben:

n ist 0 oder eine ganze Zahl von 1 bis 4;

R ist $C_1$-$C_4$-Alkyl, Halogen oder $C_1$-$C_4$-Alkoxy;

X ist O, S, S-S, SO, $SO_2$, CO, N=N,

N=N, $NR^1$ (mit $R^1$ = $C_1$-$C_4$-Alkyl oder Phenyl),

|

O

$CH_2$-$CH_2$, $CF_2$-$CF_2$, $CR_2$ (mit $R^2$ = H, F, $CF_3$ oder $C_1$-$C_5$-Alkyl, wobei -$R_2CR_2$- auch Teil eines gesättigten Ringsystems sein kann und wobei $R^2$ gleich oder verschieden sein kann), O=$PR^3$ (mit $R^3$ = Methyl, Phenyl, Methoxy oder Phenoxy), $Si(CH_3)_2$ oder eine chemische Bindung.

Bevorzugte Diphenole sind:

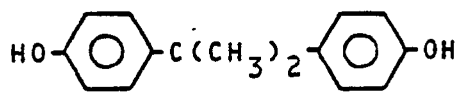

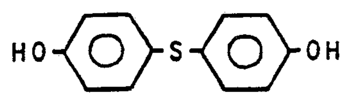

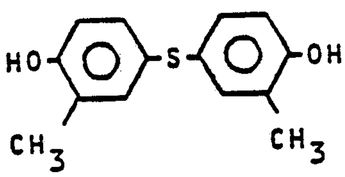

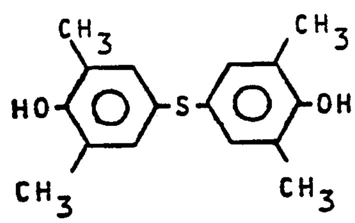

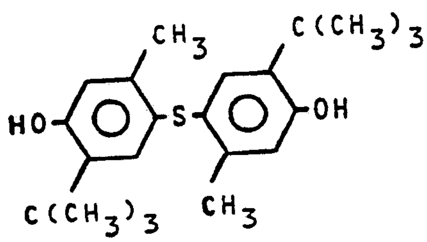

Daneben sind auch geeignet:

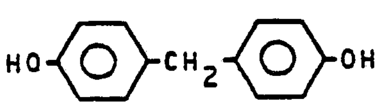 ,

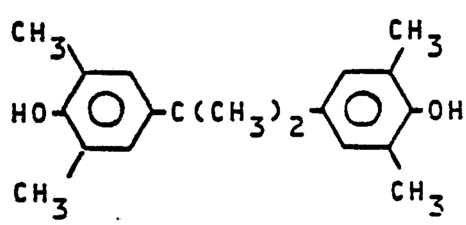 ,

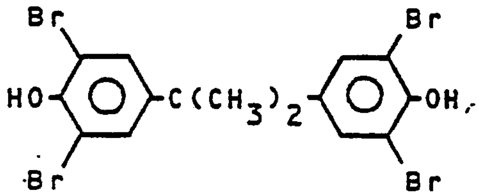, 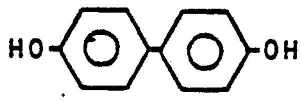, 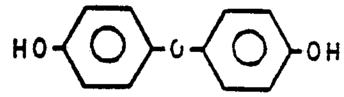,

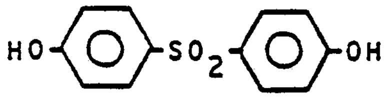, 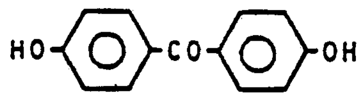 und

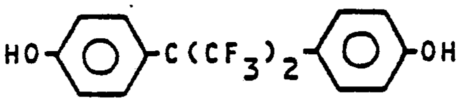, 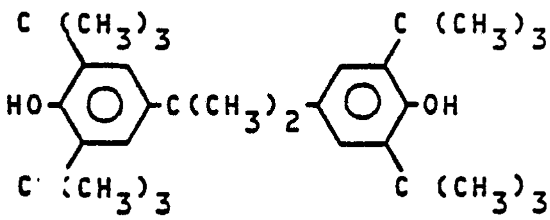,

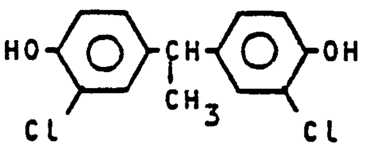, 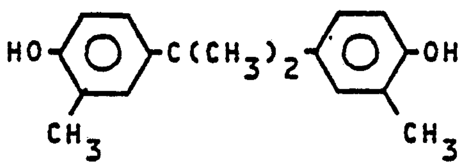

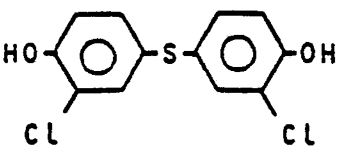, 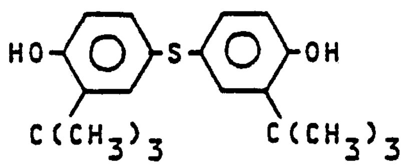, 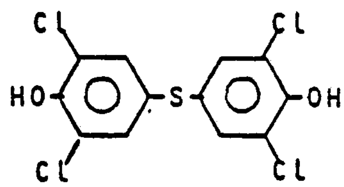

Es können auch Mischungen verschiedener Diphenole eingesetzt werden.

Als Halogenverbindungen werden gemäß einer ersten Ausführungsform Pyridinderivate der allgemeinen Formel II

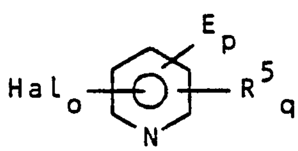 (II)

eingesetzt,

wobei die Symbole folgende Bedeutung haben:

o ist 2, 3 oder 4;
p ist 1, 2 oder 3;
q ist 0, 1 oder 2;
Hal ist F, Cl oder Br,
E ist CN, $NO_2$, $CF_3$, $SO_2R^4$ mit $R^4$ = $C_1$-$C_4$-Alkyl oder Phenyl, welches methyl-, methoxy- oder cyansubstituiert sein kann;
$R^5$ ist $C_1$-$C_4$-Alkyl, $CF_3$, Allyl oder methyl-, methoxy- oder cyan-substituiertes Benzyl oder Phenyl.

Beispielhaft seien genannt:

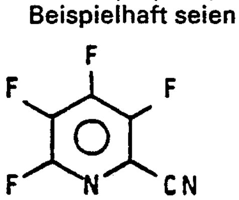 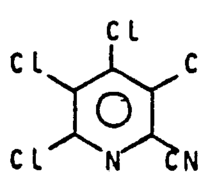 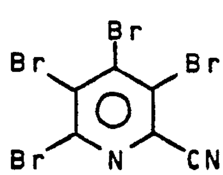

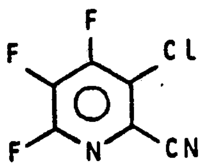
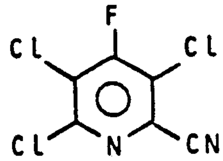
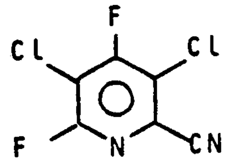

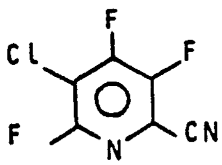
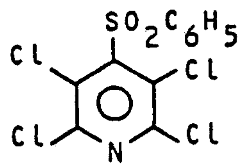
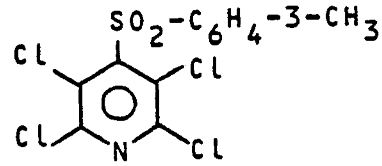

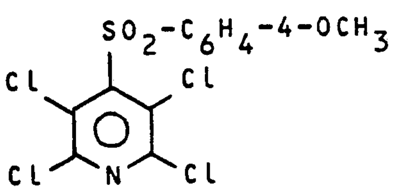
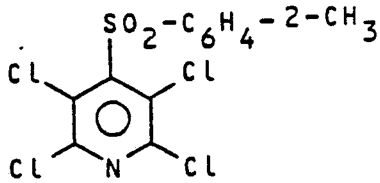
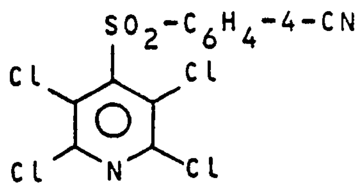

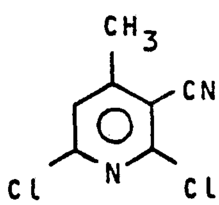
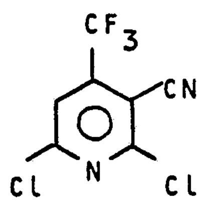
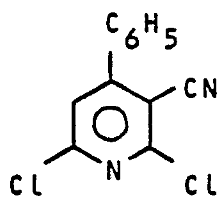
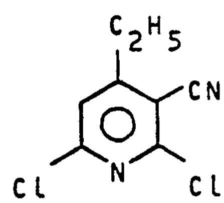

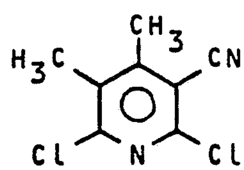
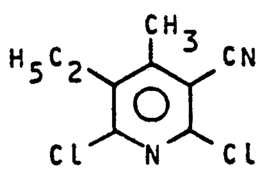
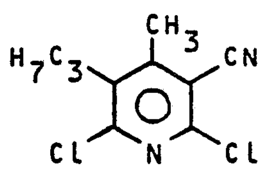

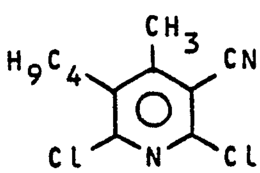
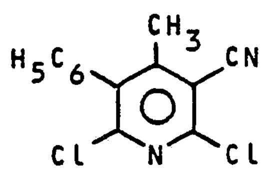
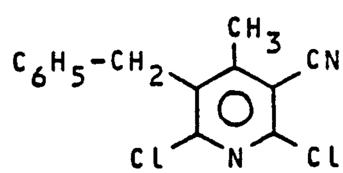

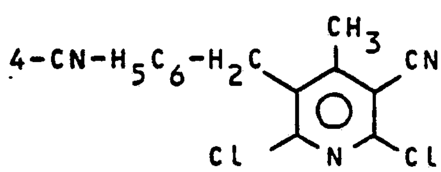
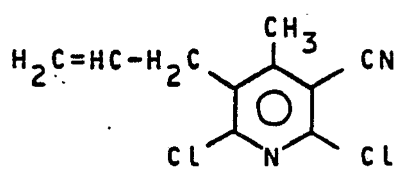
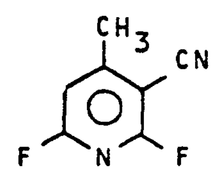

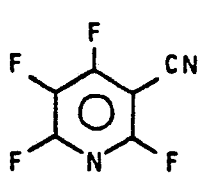
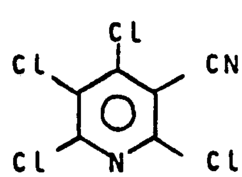
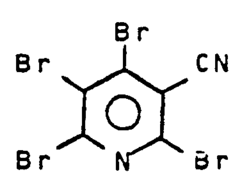

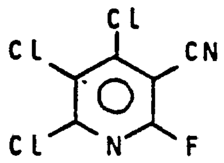
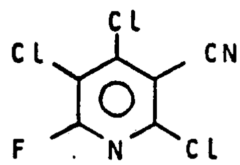
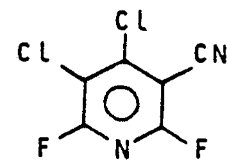
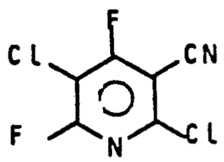
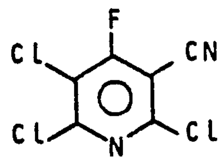
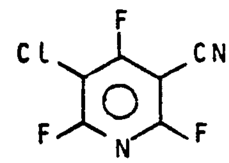
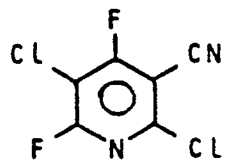
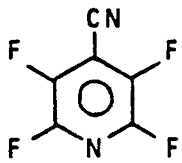
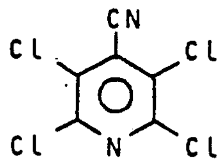
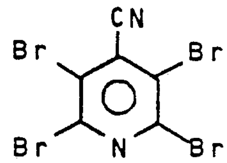
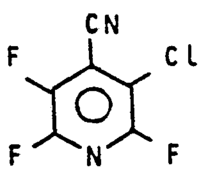
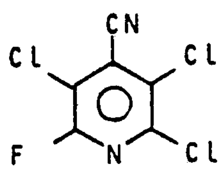
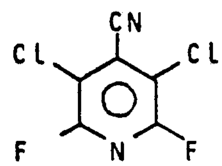
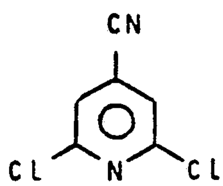
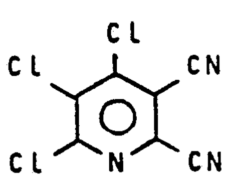
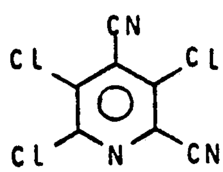
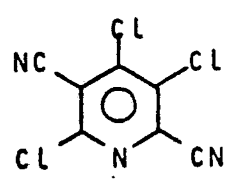
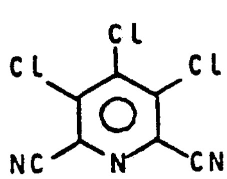
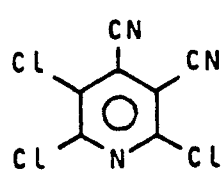
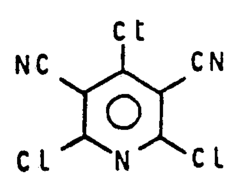
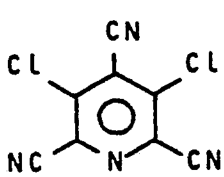
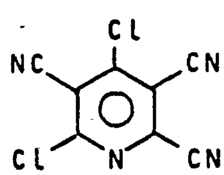

Gemäß einer anderen Ausführungsform werden Halogenverbindungen, z. B. Pyridazine, Pyrimidine und Pyrazine der allgemeinen Formel III

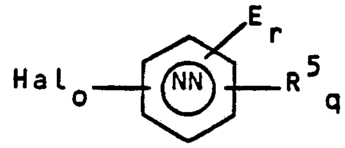

(III)

eingesetzt,

worin Hal, E, $R^5$, o und q die gleiche Bedeutung wie in Formel (II) haben und r = 0, 1 oder 2 ist. Zusätzlich kann $R^5$ noch folgende Bedeutung haben:

für q = 1: $-OCH_3$, $-OC_2H_5$, $-OC_4H_9$ und $-OCH_6H_5$.

Beispielhaft seien genannt:

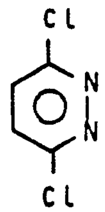
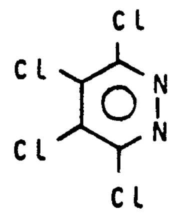
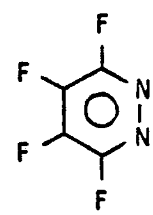
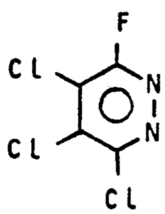
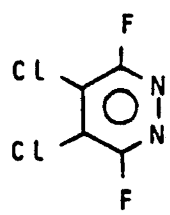
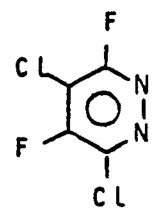
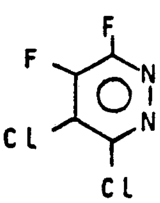
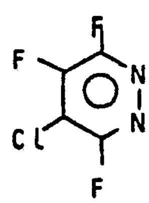
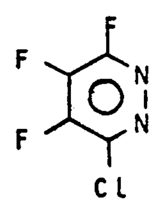
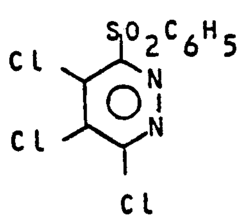
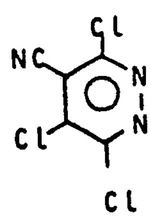
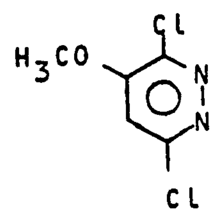
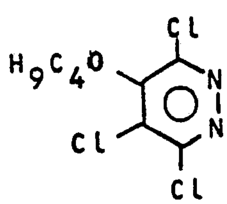
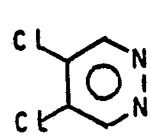
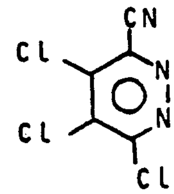
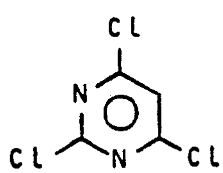
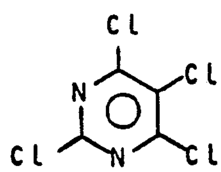
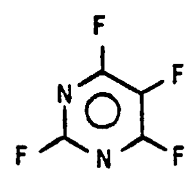

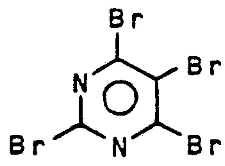 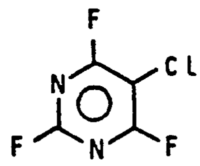 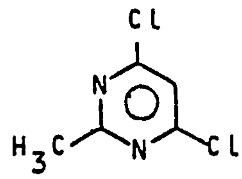

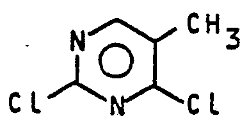 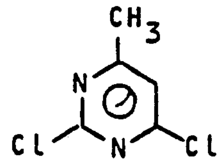 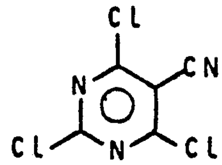 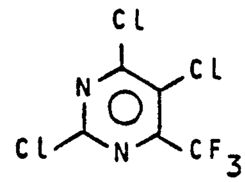

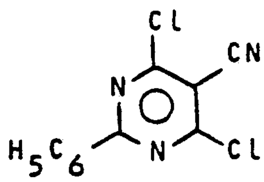 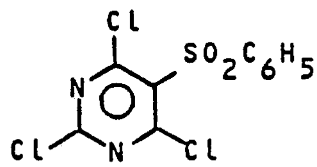 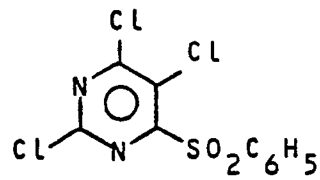

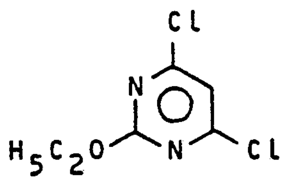 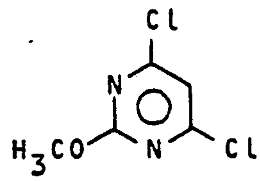

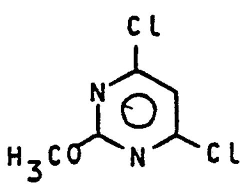 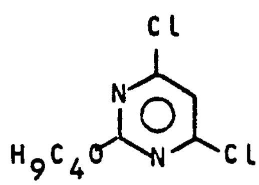 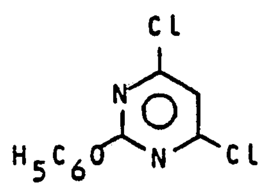 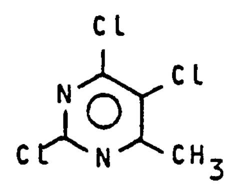

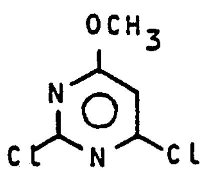 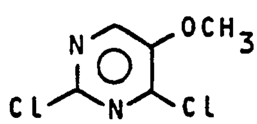 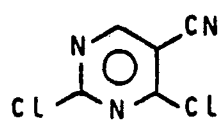 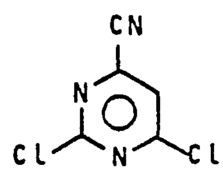

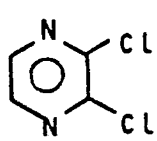 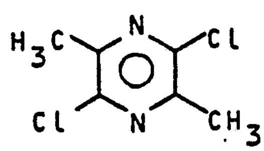 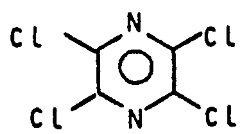

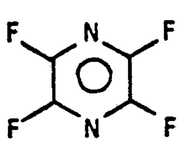 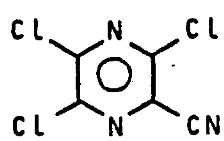 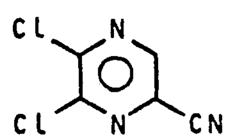 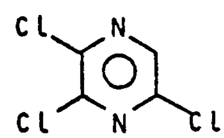

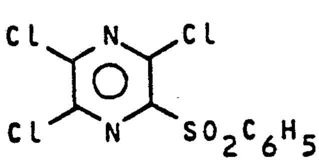 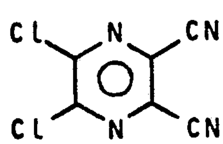 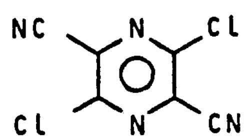

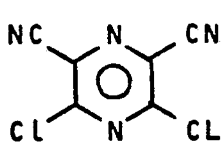 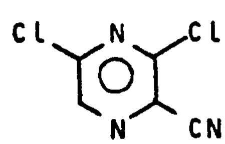

Die Halogenverbindungen der Formel IV sind Thiophenderivate

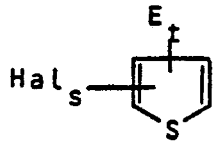

(IV)

worin Hal und E die gleiche Bedeutung wie in Formel (II) haben und s = 2 oder 3 und t = 1 oder 2 ist. Ebenfalls unter diese Gruppe von Verbindungen sollen hier

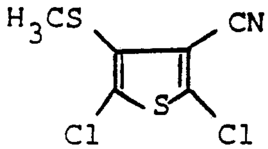

und

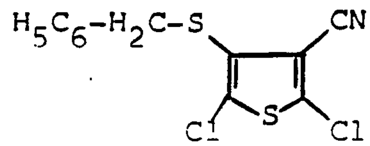

(IVa bzw. IVb)

eingeordnet werden.

Beispiele sind:

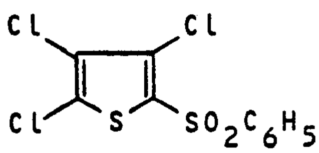
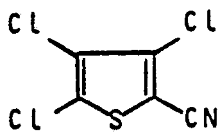
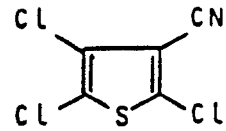
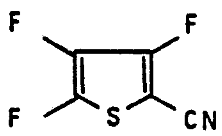
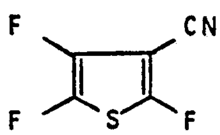
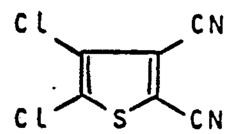
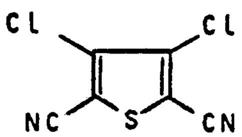
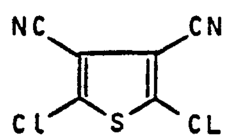
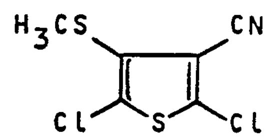
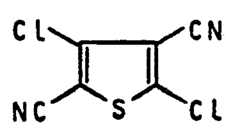
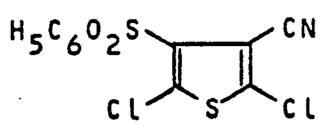
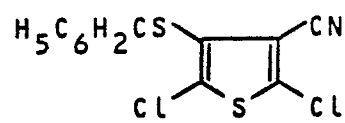

Die Halogenverbindungen der allgemeinen Formel V enthalten zwei oder mehr Nitrilgruppen:

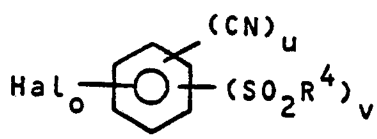

(V)

worin Hal und $SO_2R^4$ und o die gleiche Bedeutung wie in Formel (II) haben und u = 2, 3 oder 4 und v = 0 oder 1 ist.

Beispielhaft seien genannt:

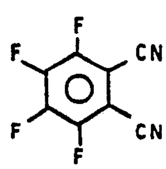
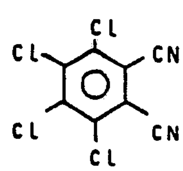
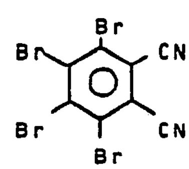
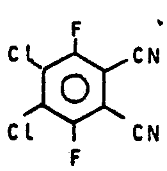
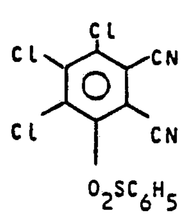
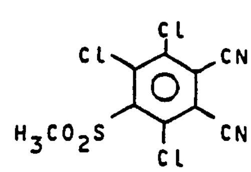

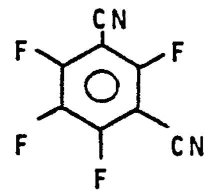
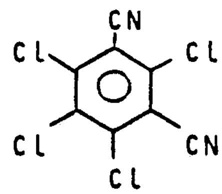
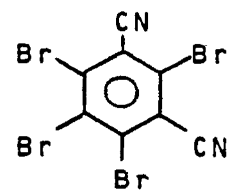

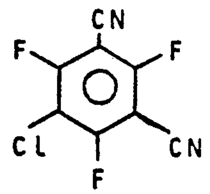
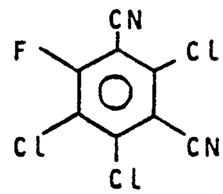
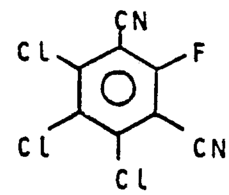

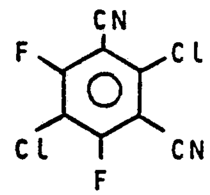
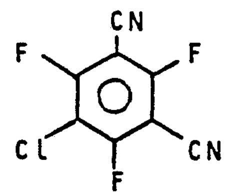
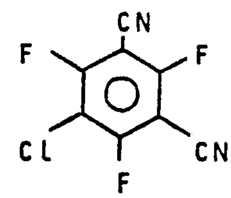

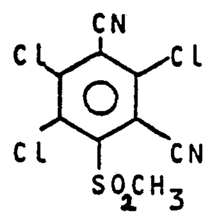
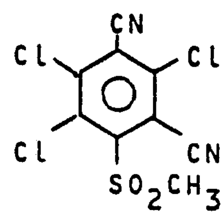
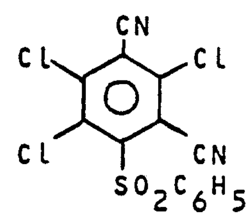

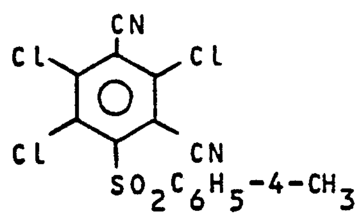
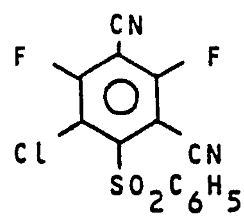
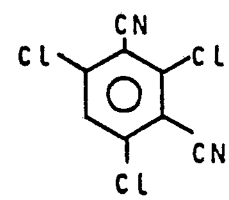

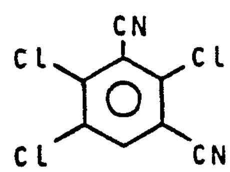

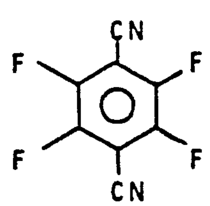
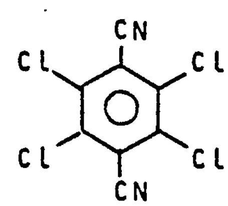
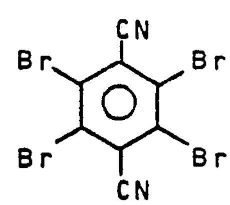

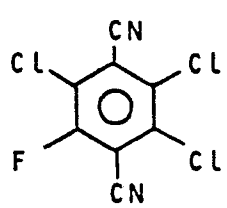
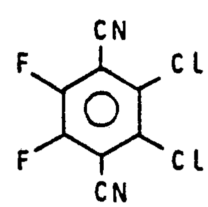
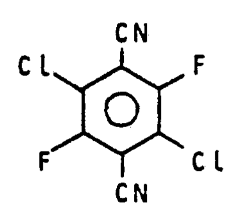

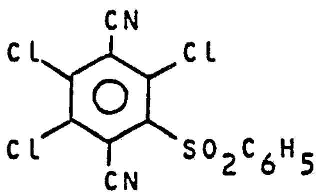
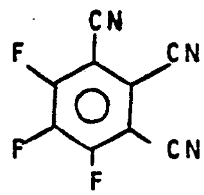
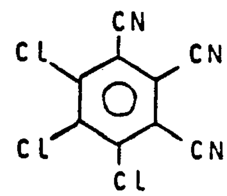

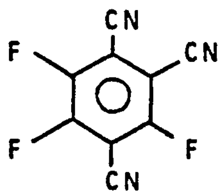
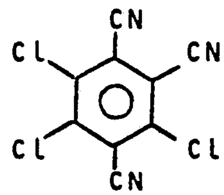
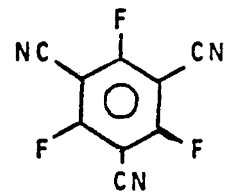

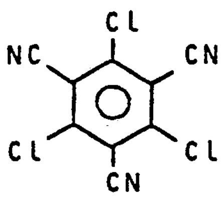
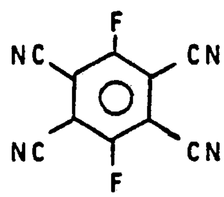
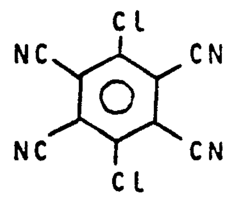

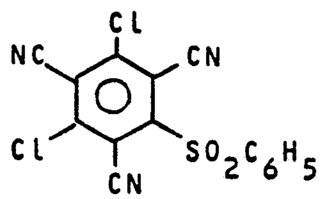
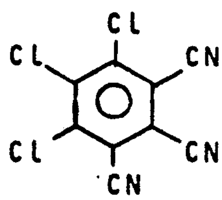
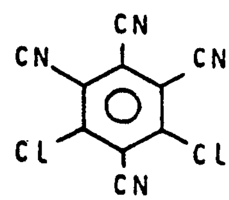

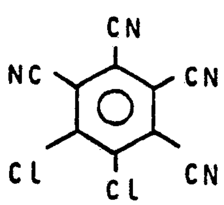

Die Halogenverbindungen der allgemeinen Formeln VI bis VIII haben folgende Strukturen:

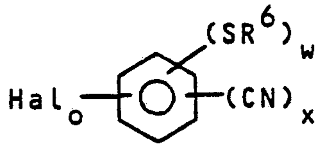

(VI)

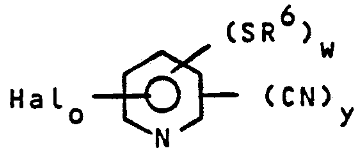

(VII)

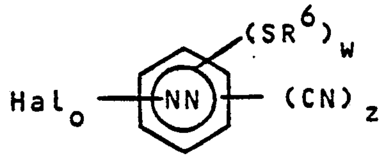

(VIII)

worin Hal und o die gleiche Bedeutung wie in Formel (II) haben;

$R^6$ bedeutet $C_1$-$C_6$-Alkyl, Allyl, Phenyl, welches methyl-, halogen-, methoxy-, cyan- oder phenylsubstituiert sein kann, oder Benzyl, welches methyl-, methoxy-, halogen- oder cyansubstituiert sein kann;

w ist 1 oder 2,

x ist 1, 2 oder 3,

y ist 0, 1 oder 2,

z ist 0 oder 1.

Beispielhaft seien genannt:

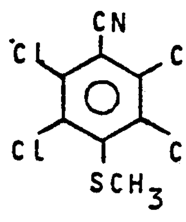

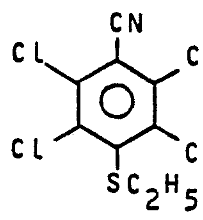

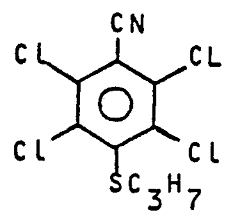

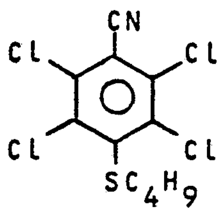

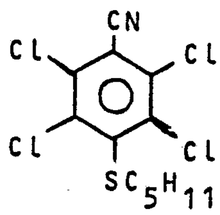

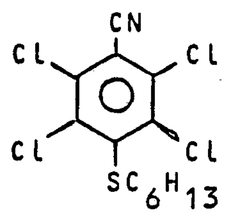

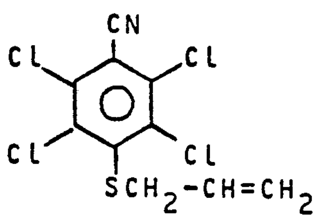

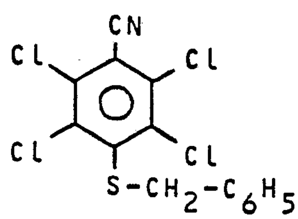

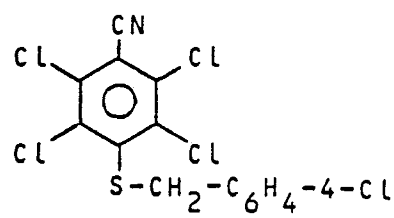

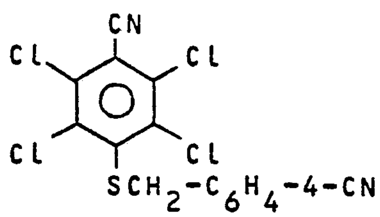

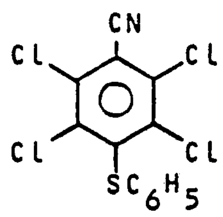

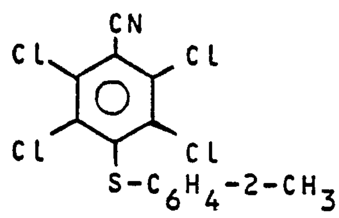

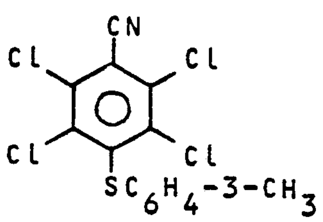

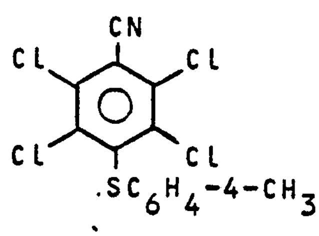

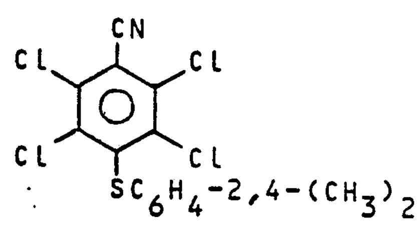

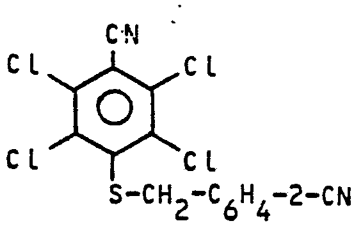

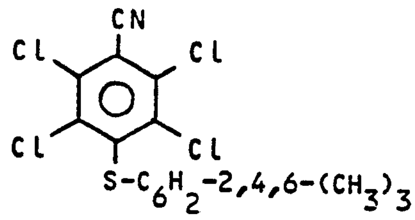
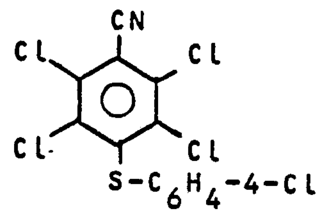
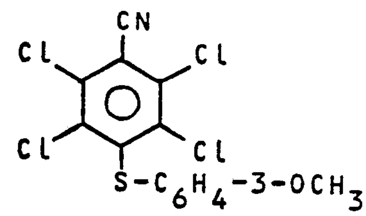
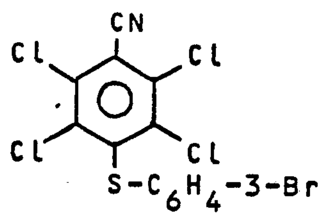
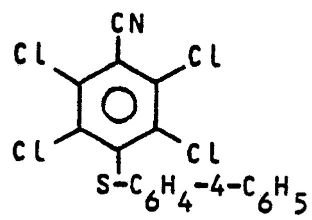
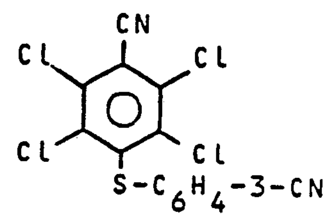
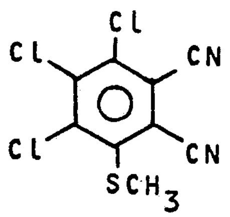
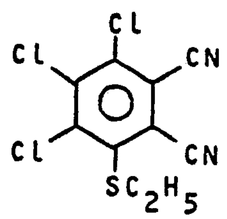
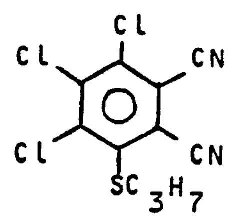
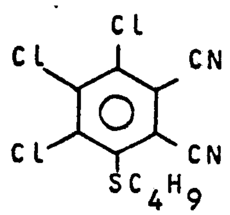
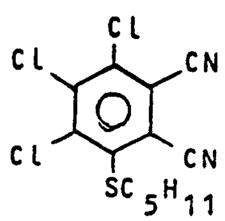
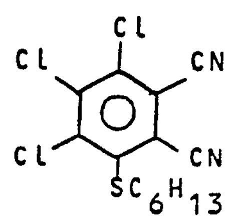
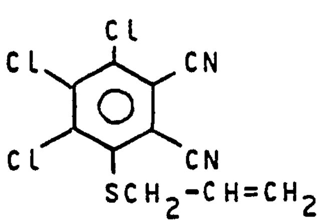
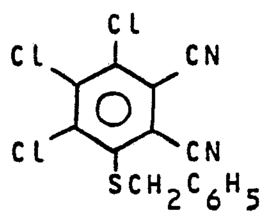
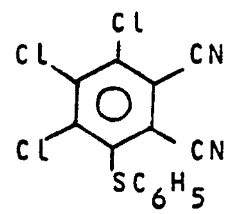
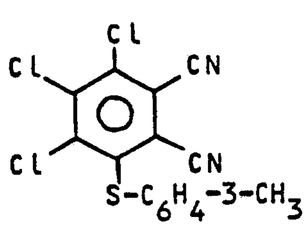
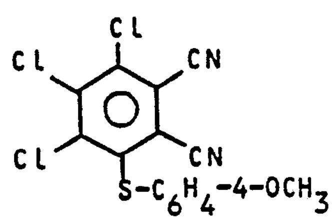
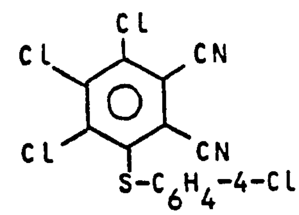
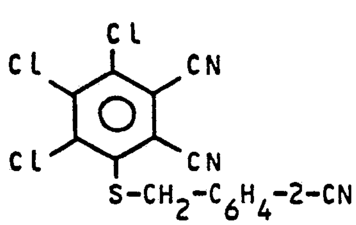
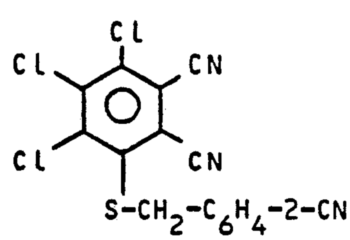

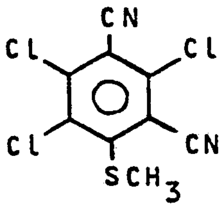
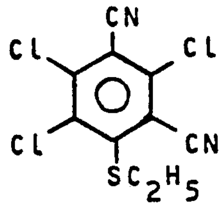
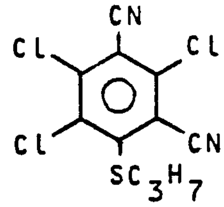

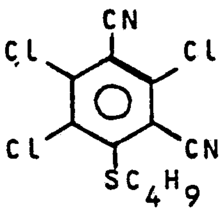
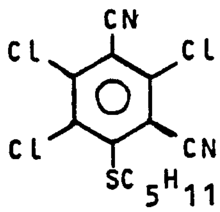
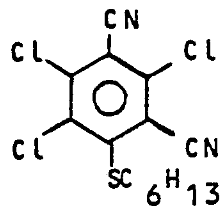

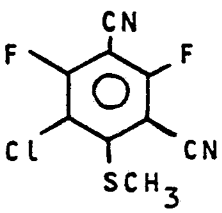
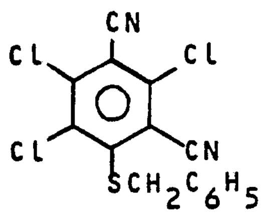
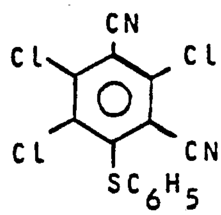

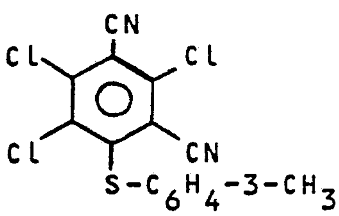
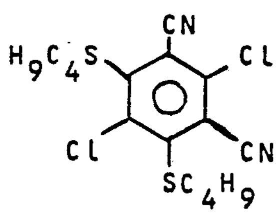
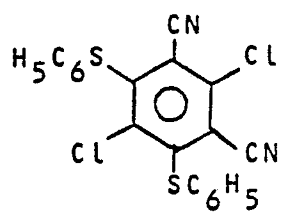

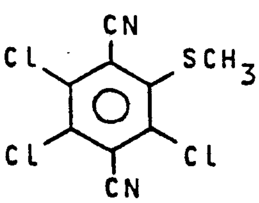
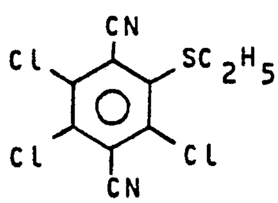
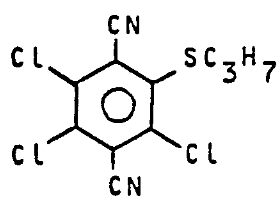

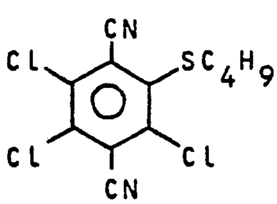
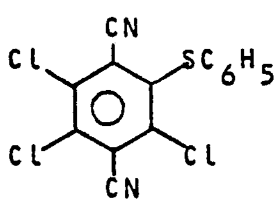
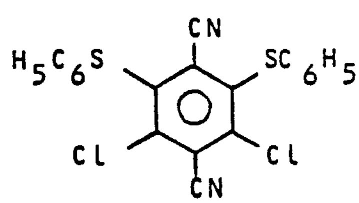

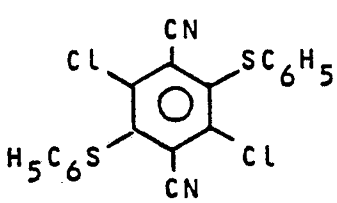
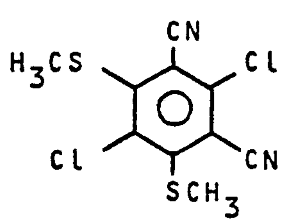

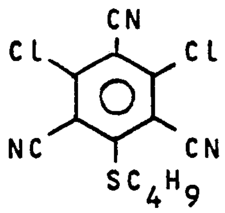
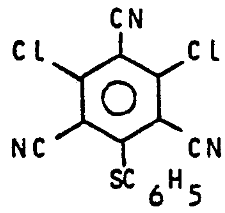
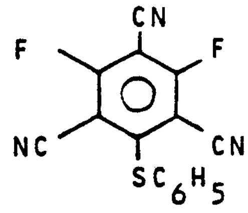

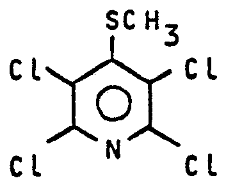
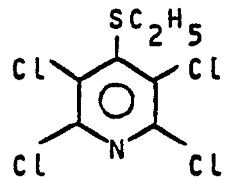
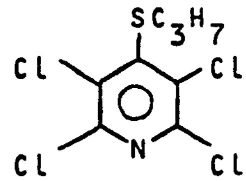

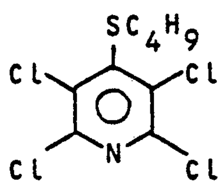
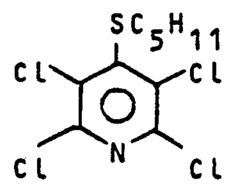
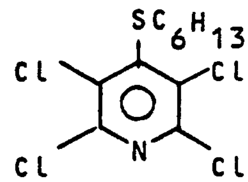

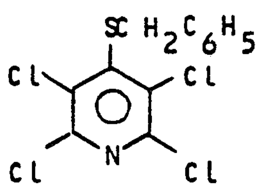
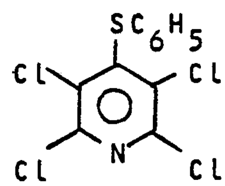
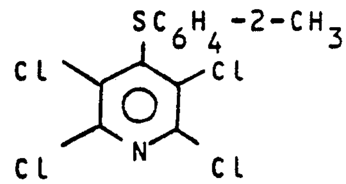

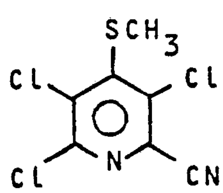
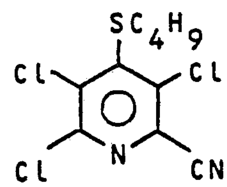
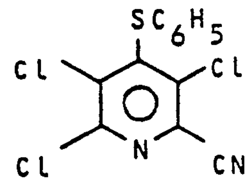

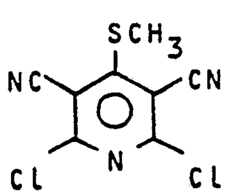
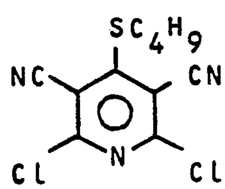
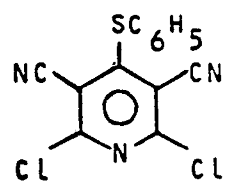

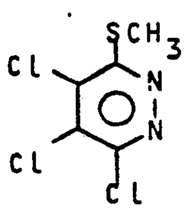
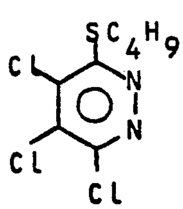
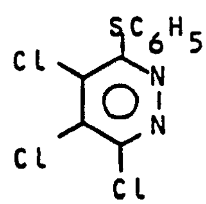

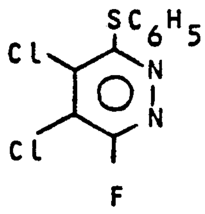 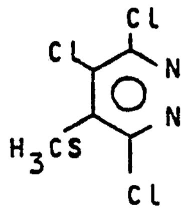 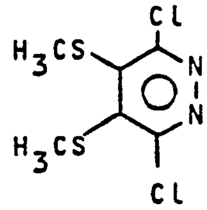

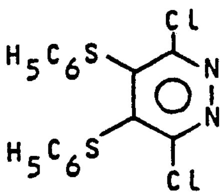 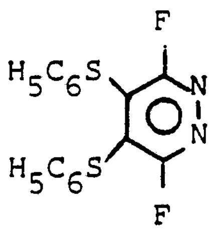

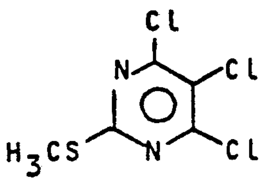 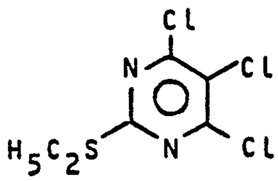 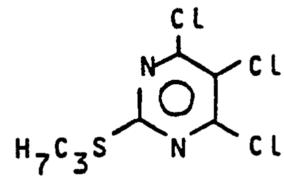

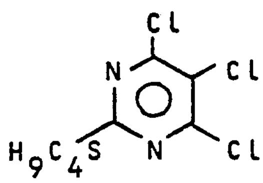 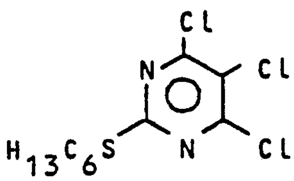 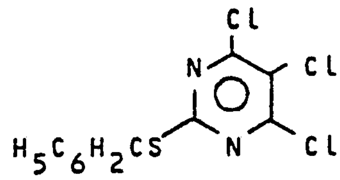

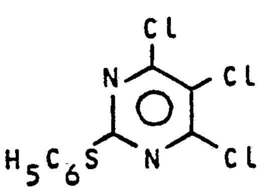 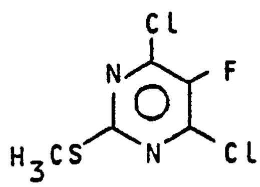 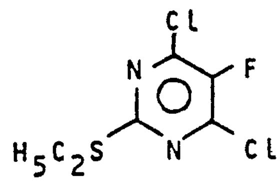

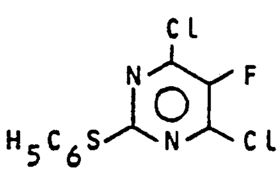 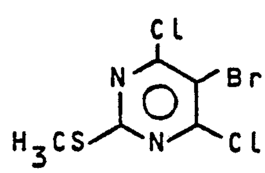 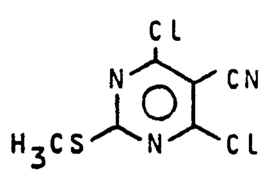

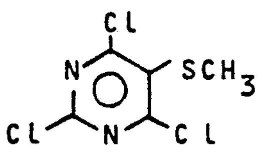 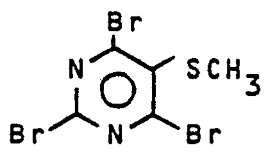 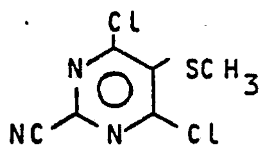

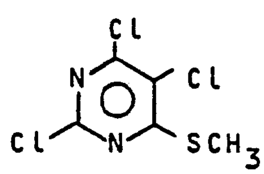 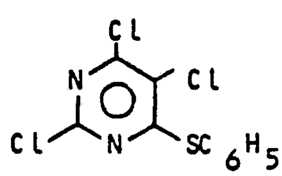 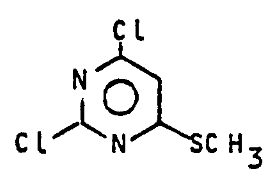

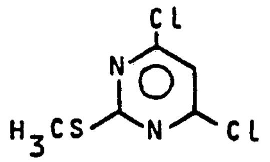

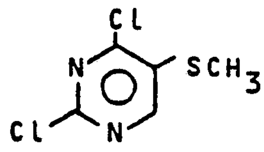

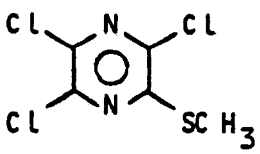

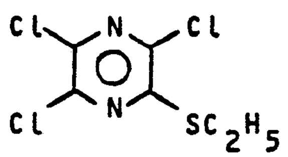

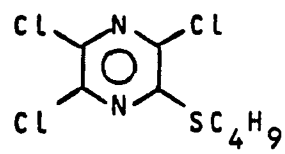

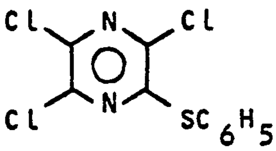

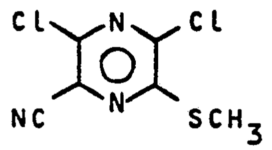

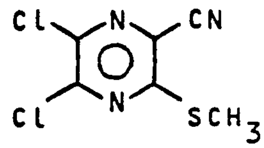

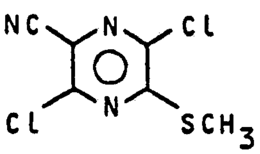

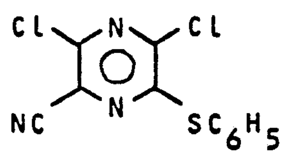

Von den vorstehend genannten Halogenverbindungen der allgemeinen Formeln II - VIII werden Pyridin- oder Thiophenderivate mit mindestens einer Nitrilgruppe, Benzolderivate mit mindestens zwei Nitrilgruppen, Pyridinderivate mit mindestens einer Arylthiogruppe, Benzolderivate mit mindestens einer Nitril- und mindestens einer Arylthiogruppe sowie Pyrimidinderivate bevorzugt.

Bei der Polykondensationsreaktion zur Herstellung der erfindungsgemäßen aromatischen Polyether können auch Mischungen der genannten Halogenverbindungen oder Mischungen mit anderen Halogenverbindungen, wie z. B. Dichlorbenzonitril oder Dichlorpyridin, eingesetzt werden.

Die Herstellung der aromatischen Polyether kann nach den üblichen Verfahren erfolgen. Bevorzugt werden Bisphenol und Dihalogenverbindung in etwa äquivalenten Mengen in Gegenwart von wasserfreiem Alkalicarbonat polykondensiert. Dies kann in Abwesenheit von Lösungsmittel durchgeführt werden, bevorzugt wird jedoch in einen polaren, aprotischen Lösungsmittel bei Temperaturen zwischen 120 und 200°C, vorzugsweise zwischen 150 und 180°C, gearbeitet, wobei zweckmäßigerweise das entstehende Wasser mit Hilfe eines Azeotropbildners entfernt wird.

Als wasserfreie Alkalicarbonate kommen beispielsweise Natrium- und vorzugsweise Kaliumcarbonate oder deren Mischungen in Betracht, bevorzugt in Mengen von 1,0 bis 2,2 Mol, bezogen auf das Bisphenol.

Als polare, aprotische Lösungsmittel gelangen Verbindungen zur Anwendung, die zu den N-substituierten Säureamiden, den Sulfoxiden oder Sulfonen zählen,. beispielsweise N,N-Dimethylformamid, N,N-Dimethylacetamid, N-Methylpyrrolidon, Dimethylsulfoxid, Dimethylsulfon, Tetramethylsulfon (Sulfolan) oder Diphenylsulfon. Bevorzugt wird N-Methylpyrrolidon verwendet.

Die polaren, aprotischen Lösungsmittel werden in Mengen von 5 bis 100, vorzugsweise von 10 bis 20 Molen, bezogen auf 1 Mol Bisphenol, verwendet. Dies bedeutet, daß die Reaktionslösungen in Abwesenheit von Alkalicarbonat und Azeotropbildner einen Feststoffgehalt von 5 bis 50 Gew.-%, vorzugsweise von 20 bis 35 Gew.-%, bezogen auf das Gesamtgewicht, aufweisen.

Geeignete Wasser-Azeotropbildner sind alle Substanzen, die im Bereich der Reaktionstemperatur bei Normaldruck sieden und sich mit dem Reaktionsgemisch homogen mischen lassen, ohne chemische Reaktionen einzugehen. Als Azeotropbildner der genannten Art seien beispielsweise genannt: Chlorbenzol, Toluol und Xylol.

Zur Durchführung dieses Verfahrens wird die Reaktionsmischung in der ersten Reaktionsstufe bis zur Abtrennung von mindestens 90 Gew.-%, vorzugsweise 90 bis 96 Gew.-%, bezogen auf das Gesamtgewicht, der theoretisch möglichen Wassermenge vorteilhafterweise 0,5 bis 4 Stunden, vorzugsweise 1 bis 2 Stunden, erhitzt.

In der zweiten Reaktionsstufe wird das Reaktionsgemisch bis zur völligen Wasserfreiheit polykondensiert und hierzu wird das Reaktionsgemisch ständig mit weiterem Azeotropgemisch abdestilliert. Die Reaktionszeit beträgt ungefähr 0,5 bis 4 Stunden, vorzugsweise 1 bis 2 Stunden.

Die Reaktionszeit in der dritten Stufe zur Polykondensation bis zur gewünschten Viskosität des Polyethers beträgt ungefähr 3 bis 12 Stunden, vorzugsweise 4 bis 8 Stunden. Danach wird die Polykondensation durch Einleiten von Methylchlorid abgestoppt. Die Reaktionszeit hierfür beträgt ungefähr 0,1 bis 2, vorzugsweise 0,2 bis 0,5 Stunden.

Die Isolierung des Polyethers in der vierten Stufe schließlich kann auf verschiedene Weise durchgeführt werden. Eine Abscheidung des festen Polymeren kann durch Mischung der Reaktionslösung mit einem Fällungsmittel, z. B. Wasser und/oder Methanol, durch starkes Rühren, Verspritzen oder Verdüsen geschehen. Andererseits kann das Lösungsmittel auch verdampft werden. Die anorganischen Bestandteile können durch geeignete Methoden wie Lösen, Filtrieren oder Sieben aus dem Polyether entfernt werden.

Die so hergestellten Polyarylether weisen vorzugsweise einen mittleren Polymerisationsgrad von 5 bis 500, insbesondere von 10 bis 250 auf. Die Glastemperatur liegt vorzugsweise oberhalb von 130° C.

Die erfindungsgemäßen Polyether können die üblichen Zusatzstoffe wie Füllstoffe, Verstärkungsfasern, Farbstoffe, Stabilisatoren und Flammschutzmittel enthalten. Sie sind vorzüglich zur Herstellung von Formteilen, Fasern, Folien, Kleb- und Beschichtungsstoffen geeignet.

Die aus den erfindungsgemäßen Polyarylethern hergestellten Fertigteile können auf Temperaturen oberhalb von 150° C, vorzugsweise zwischen 250 und 450° C während einer Zeitdauer von 1 bis 24 Stunden erhitzt werden, wobei eine Vernetzung eintritt.

Dabei werden unschmelzbare, lösungsmittelbeständige Formkörper erhalten, die auch bei hohen Temperaturen, z. B. oberhalb von 300° C noch gute mechanische Eigenschaften aufweisen. Die Fertigteile sind nach dem Vernetzen gegen Lösungsmittel - z. B. Chlorkohlenwasserstoffe - stabil und spannungsrißbeständig.

Die in den Beispielen genannten Teile und Prozente beziehen sich auf das Gewicht.

## Beispiele

### Verfahren A

0,25 Mol Diphenol und 0,25 Mol Dihalogenverbindung wurden unter Inertgas in 420 ml N-Methylpyrrolidon und 190 ml Toluol gelöst und mit 0,26 Mol wasserfreiem Kaliumcarbonat versetzt. Das Reaktionsgemisch wurde unter ständigem Abdestillieren eines azeotropen Gemisches aus Wasser und Toluol innerhalb von 5 Stunden auf 150° C erhitzt. Nach vollständigem Entfernen des Toluols wurde die Temperatur auf 180° C gesteigert und das Reaktionsgemisch 5 Stunden bei dieser Temperatur belassen. Durch 30minütiges Einleiten eines Methylchlorid-Stromes wurde die Polykondensation abgebrochen.

Die anorganischen Bestandteile wurden nach Zugabe von 300 ml Chlorbenzol abfiltriert und das Polymere in einem Gemisch aus gleichen Teilen 1 %-iger Essigsäure und Methanol gefällt. Nach sorgfältigem Waschen mit Wasser und Methanol wurde 12 Stunden bei 100° C im Vakuum getrocknet.

### Verfahren B

1 Mol Diphenol und 2 Mol KOH (als frisch bereitete 50 %-ige wäßrige Lösung) wurden unter Inertgas in 100 ml Dimethylsulfoxid und 500 ml Toluol gelöst und unter ständigem Abdestillieren eines azeotropen Gemisches aus Wasser und Toluol auf 150° C erhitzt. Nach dem vollständigen Entfernen von Wasser und Toluol wurde das Reaktionsgemisch auf 80° C abgekühlt. Zu der wasserfreien Lösung des Bisphenolats tropfte man anschließend eine 80° C heiße Lösung von 1 Mol Dihalogenverbindung in 500 ml wasserfreiem Dimethylsulfoxid und kondensierte 5 Stunden bei 80° C. Die anorganischen Bestandteile wurden nach Zugabe von 800 ml Chlorbenzol abfiltriert und das Polymere in einem Gemisch aus gleichen Teilen 1 %-iger Essigsäure und Methanol gefällt. Nach sorgfältigem Waschen mit 1 %-iger Essigsäure, Wasser und Methanol wurde 12 Stunden im Vakuum getrocknet.

In der Tabelle sind die Beispiele aufgeführt.

| Beispiel | Dihalogenverbindung | Diphenol | Verfahren | Glas-temperatur |
|---|---|---|---|---|
| 1 | 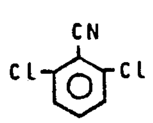 | 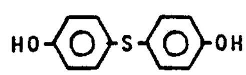 | A | 153°C |
| 2 | 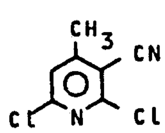 | 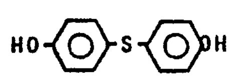 | A,B | 154°C |

| Beispiel | Dihalogenverbindung | Diphenol | Verfahren | Glastemperatur |
|---|---|---|---|---|
| 3 | 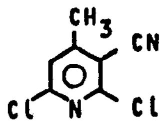 | 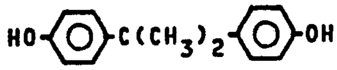 | A,B | 165°C |
| 4 | 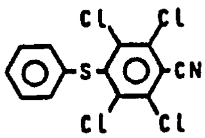 | 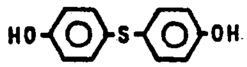 | A,B | 158°C |
| 5 | 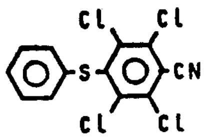 | 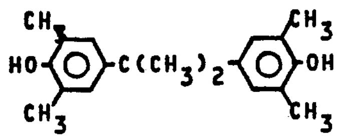 | A | 169°C |
| 6 | 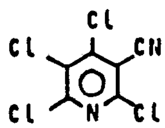 | 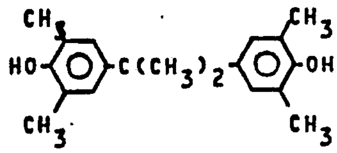 | B | 178°C |
| 7 | 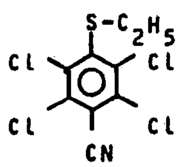 | 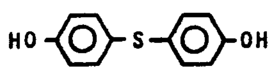 | A,B | 140°C |
| 8 | 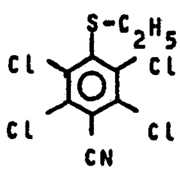 | 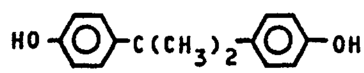 | A,B | 150°C |
| 9 | 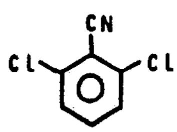 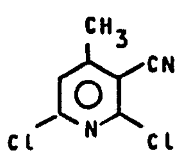 Verh. 1:1 | 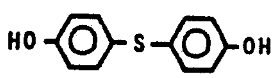 | A | 152°C |
| 10 | 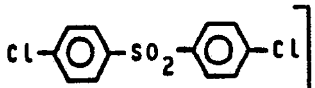 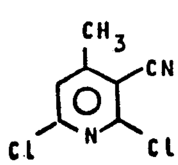 Verh. 3:1 | 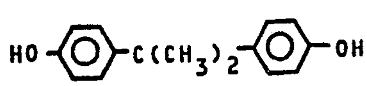 | A | 168°C |

| Beispiel | Dihalogenverbindung | Diphenol | Verfahren | Glas-temperatur |
|---|---|---|---|---|
| 11 | 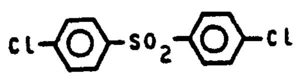 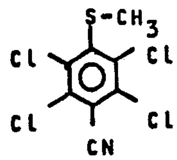 Verh. 4:1 | 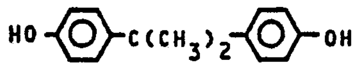 | A | 182°C |
| 12 | 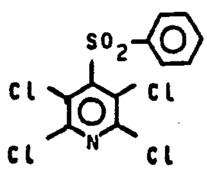 | 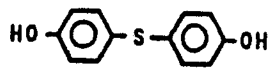 | B | 162°C |
| 13 | 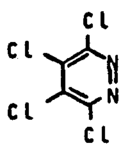 | 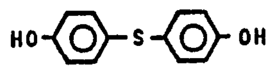 | B | 166°C |
| 14 | 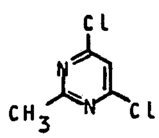 | 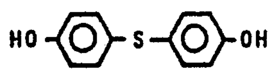 | B | 153°C |
| 15 | 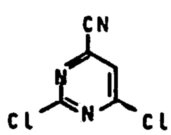 | 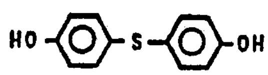 | B | 155°C |
| 16 | 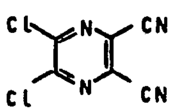 | 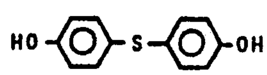 | B | 148°C |
| 17 | 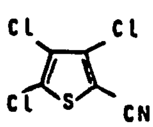 | 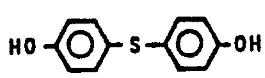 | B | 144°C |

**Patentansprüche**

1. Temperaturbeständige aromatische Polyether, aufgebaut aus Diphenolen der allgemeinen Formel

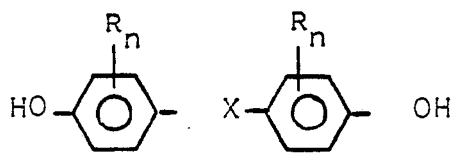

(I)

wobei die Symbole n, R und X folgende Bedeutung haben:
n ist 0 oder eine ganze Zahl von 1 bis 4;
R ist $C_1$-$C_4$-Alkyl, Halogen oder $C_1$-$C_4$-Alkoxy;
X ist O, S, S-S, SO, $SO_2$, CO, N=N,
N=N, $NR^1$ (mit $R^1$=
|
O
$C_1$-$C_4$-Alkyl oder Phenyl) $CH_2$-$CH_2$ $CF_2$-$CF_2$, $CR_2$ (mit $R^2$ =H, F, $CF_3$ oder $C_1$-$C_5$-Alkyl, wobei -$R_2CR_2$- auch Teil eines gesättigten Ringsystems sein kann und wobei $R^2$ gleich oder verschieden sein kann), O=$PR^3$ (mit $R^3$ = Methyl, Phenyl, Methoxy oder Phenoxy), $Si(CH_3)_2$ oder eine chemische Bindung,

und einkernigen aromatischen Halogenverbindungen mit mindestens zwei Halogensubstituenten der allgemeinen Formeln II - VIII

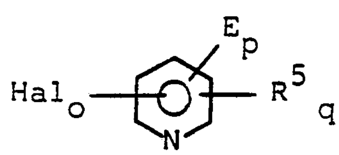

(II)

wobei die Symbole folgende Bedeutung haben:
o ist 2, 3 oder 4;
p ist 1, 2 oder 3;
q ist 0, 1 oder 2;
Hal ist F, Cl oder Br,
E ist CN, $NO_2$, $CF_3$, $SO_2R^4$, mit $R_4$ = $C_1$-$C_4$-Alkyl oder Phenyl, welches methyl-, methoxy- oder cyansubstituiert sein kann;
$R^5$ ist $C_1$-$C_4$-Alkyl, $CF_3$, Allyl oder methyl-, methoxy- oder cyan-substituiertes Benzyl oder Phenyl.

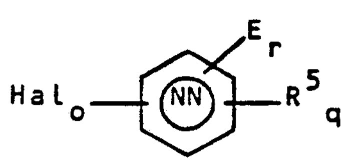

(III)

worin Hal, E, $R^5$, o und q die gleiche Bedeutung wie in Formel (II) haben und r = 0, 1 oder 2 ist. Für q = 1 kann $R^5$ auch -$OCH_3$,-$OC_2H_5$,-$OC_4H_9$ und -$OC_6H_5$ sein.

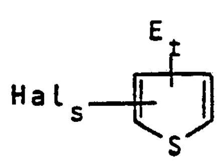

(IV)

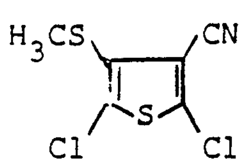

(IVa)

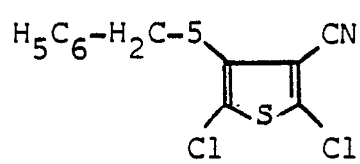

(IVb)

worin Hal und E die gleiche Bedeutung wie in Formel (II) haben und s = 2 oder 3 und t = 1 oder 2 ist.

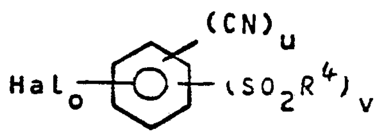 (V)

worin Hal und $SO_2R^4$ und o die gleiche Bedeutung wie in Formel (II) haben und u = 2, 3 oder 4 und v = 0 oder 1 ist.

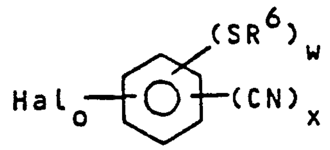 (VI)

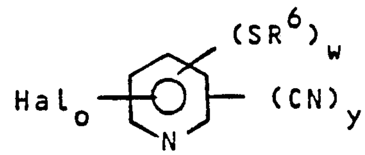 (VII)

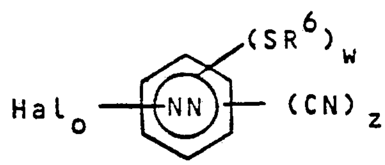 (VIII)

worin Hal und o die gleiche Bedeutung wie in Formel (II) haben;

$R^6$ bedeutet $C_1$-$C_6$-Alkyl, Allyl, Phenyl, welches methyl-, halogen-, methoxy-, cyan- oder phenylsubstituiert sein kann, oder Benzyl, welches methyl-, methoxy-, halogen- oder cyansubstituiert sein kann;

w ist 1 oder 2,

x ist 1, 2 oder 3,

y ist 0, 1 oder 2,

z ist 0 oder 1.

2. Polyether nach Anspruch 1, dadurch gekennzeichnet, daß die Diphenole 2,2'-Bis-(4-hydroxiphenyl)propan oder gegebenenfalls $C_1$-$C_4$-alkylsubstituierte 4,4'-Dihydroxidiphenylsulfide sind.

3. Polyether nach Anspruch 1, dadurch gekennzeichnet, daß die Halogenverbindung ein Pyridinderivat ist, welches mindestens eine Nitrilgruppe enthält.

4. Polyether nach Anspruch 1, dadurch gekennzeichnet, daß die Halogenverbindung ein Thiophenderivat ist, welches mindestens eine Nitrilgruppe enthält.

5. Polyether nach Anspruch 1, dadurch gekennzeichnet, daß die Halogenverbindung ein Benzolderivat ist, welches mindestens zwei Nitrilgruppen enthält.

6. Polyether nach Anspruch 1, dadurch gekennzeichnet, daß die Halogenverbindung ein Pyridinderivat ist, welches mindestens eine Arylthiogruppe enthält.

7. Polyether nach Anspruch 1, dadurch gekennzeichnet, daß die Halogenverbindung ein Benzolderivat ist welches mindestens eine Nitrilgruppe und mindestens eine Arylthiogruppe enthält.

8. Polyether nach Anspruch 1, dadurch gekennzeichnet, daß die Halogenverbindung ein Pyrimidinderivat ist.

**Claims**

1. A heat-stable aromatic polyether, composed of diphenols of the formula

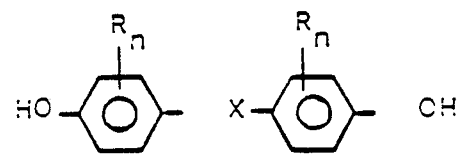

(I)

where n is 0 or an integer from 1 to 4, R is $C_1$-$C_4$-alkyl, halogen or $C_1$-$C_4$-alkoxy and X is O, S, S-S, SO, $SO_2$, CO, N=N, N=N, $NR^1$ (where $R^1$ is $C_1$-$C_4$-alkyl or phenyl),

$CH_2$-$CH_2$, $CF_2$-$CF_2$, $CR^2$ (where $R^2$ is H, F, $CF_3$ or $C_1$-$C_5$-alkyl, and -$R^2CR^2$- may furthermore be part of a saturated ring system and $R^2$ may be identical or different, $O=PR^3$ (where $R^3$ is methyl, phenyl, methoxy or phenoxy), $Si(CH_3)_2$ or a chemical bond, and mononuclear aromatic halogen compounds having two or more halogen substituents, of the formulae II-VIII

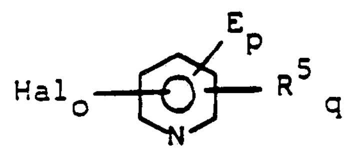

(II)

where o is 2, 3 or 4, p is 1, 2 or 3, q is 0, 1 or 2, Hal is F, Cl or Br, E is CN, $NO_2$, $CF_3$, $SO_2R^4$, where $R^4$ is $C_1$-$C_4$-alkyl or phenyl which may be substituted by methyl, methoxy or cyano, and $R^5$ is $C_1$-$C_4$-alkyl, $CF_3$, allyl, or phenyl or benzyl which is substituted by methyl, methoxy

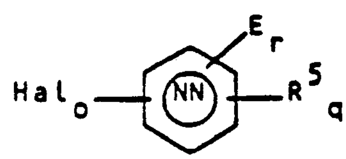

(III)

where Hal, E, $R^5$, o and q have the same meanings as in formula (II) and r is 0, 1 or 2 and, where q is 1, $R^5$ may furthermore be $-OCH_3$, $-OC_2H_5$-, $-OC_4H_9$ or $-OC_6H_5$;

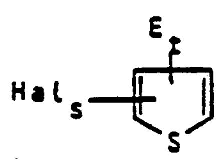

(IV)

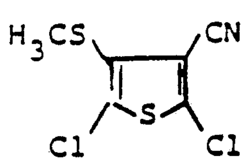

(IVa)

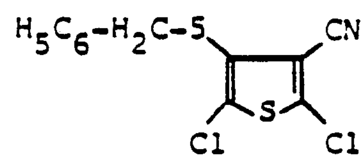

(IVb)

where Hal and E have the same meanings as in formula (II) and s is 2 or 3 and t is 1 or 2;

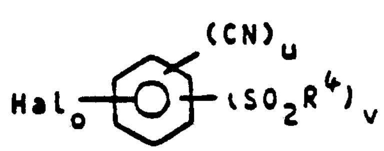

(V)

where Hal and $SO_2R^4$ and o have the same meanings as in formula (II) and u is 2, 3 or 4 and v is 0 or 1;

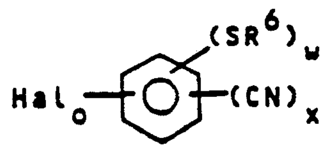

(VI)

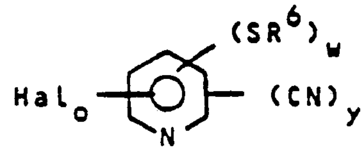

(VII)

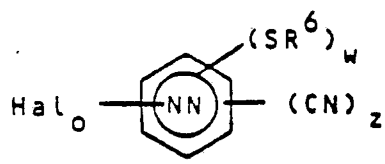

(VIII)

where Hal and o have the same meanings as in formula (II), $R^6$ is $C_1$-$C_6$-alkyl, allyl, phenyl which may be substituted by methyl, halogen, methoxy, cyano or phenyl, or benzyl which may be substituted by methyl, methoxy, halogen or cyano, w is 1 or 2, x is 1, 2 or 3, y is 0, 1 or 2 and z is 0 or 1.

2. A polyether as claimed in claim 1, wherein the diphenol is 2,2'-bis-(4-hydroxyphenyl)-propane or an unsubstituted or $C_1$-$C_4$-alkyl-substituted 4,4'-dihydroxy-diphenyl sulfide.

3. A polyether as claimed in claim 1, wherein the halogen compound is a pyridine derivative which contains one or more nitrile groups.

4. A polyether as claimed in claim 1, wherein the halogen compound is a thiophene derivative which contains one or more nitrile groups.

5. A polyether as claimed in claim 1, wherein the halogen compound is a benzene derivative which contains two or more nitrile groups.

6. A polyether as claimed in claim 1, wherein the halogen compound is a pyridine derivative which contains one or more arylthio groups.

7. A polyether as claimed in claim 1, wherein the halogen compound is a benzene derivative which contains one or more nitrile groups and one or more arylthio groups.

8. A polyether as claimed in claim 1, wherein the halogen compound is a pyrimidine derivative.

**Revendications**

1. Polyéthers aromatiques stables aux températures, constitués de diphénols de la formule générale

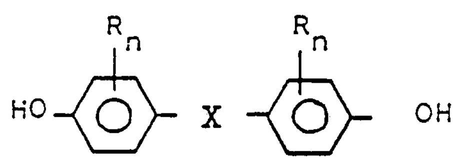

(I)

dans laquelle les symboles n, R et X possèdent les significations qui suivent:

n est égal à 0 ou représente un nombre entier dont la valeur fluctue de 1 à 4;

R représente un radical alkyle en $C_1$-$C_4$, un atome d'halogéne ou un radical alcoxy en $C_1$-$C_4$;

X représente O, S, S-S, SO, $SO_2$, CO, N=N,

N=N, $NR^1$ (où

|

O

$R^1$ représente un radical alkyle en $C_1$-$C_4$ ou un radical phényle), $CH_2$-$CH_2$, $CF_2$-$CF_2$, $CR_2$ (où $R^2$ représente un atome d'hydrogène, de fluor, un radical $CF_3$ ou alkyle en $C_1$-$C_5$ et -$R_2CR_2$ - peut aussi faire partie d'un système cyclique saturé et les symboles $R^2$ peuvent être identiques ou différents), O=$PR^3$ (où $R^3$ représente un radical méthyle, phényle, méthoxy ou phénoxy), $Si(CH_3)_2$, ou une liaison chimique et de composés halogéno-aromatiques mononucléaires, qui comportent au moins 2 halogènes substituants, répondant aux formules générales II-VIII

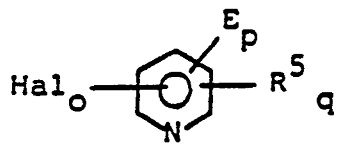

(II)

dans laquelle les divers symboles ont les significations qui suivent:

o est égal à 2, 3 ou 4;

p est égal à 1, 2 ou 3,

q est égal à 0, 1 ou 2;

Hal représente un atome de fluor, de chlore ou de brome,

E représente un radical CN, $NO_2$, $CF_3$, $SO_2R^4$ où $R_4$ désigne un radical alkyle en $C_1$-$C_4$ ou un radical phényle qui peut être méthyl-, méthoxy- ou cyanosubstitué;

$R^5$ représente un radical alkyle en $C_1$-$C_4$, un radical $CF_3$, un radical benzyle ou phényle, ces deux derniers pouvant être méthyl-, méthoxy- ou cyanosubstitués;

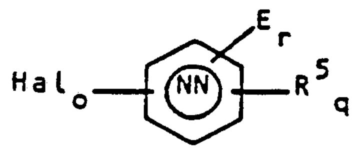

(III)

dans laquelle Hal, E, $R^5$, o et q possèdent les significations qui leur ont été attribuées à propos de la définition de la formule (II) et r = 0, 1 ou 2 et lorsque q est égal à 1, $R^5$ peut également représenter les radicaux $-OCH_3$, $-OC_2H_5$, $-OC_4H_9$ et $-OC_6H_5$.

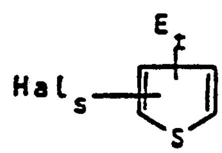

(IV)

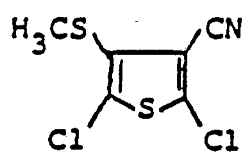

(IVa)

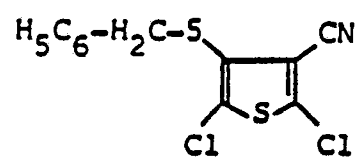

(IVb)

dans lesquelles Hal et E possèdent les significations qui leur ont été précédemment attribuées à propos de la définition de la formule (II) et s = 2 ou 3 et t = 1 ou 2;

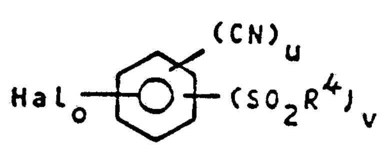

(V)

dans laquelle Hal et $SO_2R^4$ et o possèdent les mêmes significations que celles qui leur ont été attribuées à propos de la définition de la formule (II) et u = 2, 3 ou 4 et v = 0 ou 1;

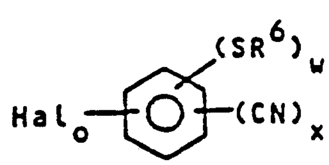

(VI)

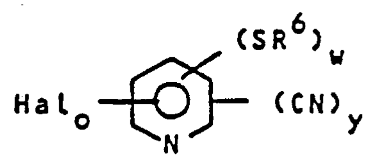

(VII)

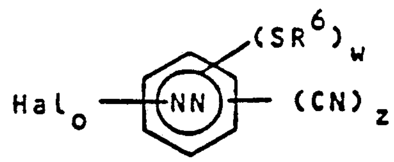

(VIII)

dans lesquelles Hal et o possèdent les mêmes significations que celles qui leur ont été précédemment attribuées à propos de la définition de la formule (II),

$R^6$ représente un radical alkyle en $C_1$-$C_6$, allyle, phényle qui peut être méthyl-, halogéno-, méthoxy-, cyano- ou phényl-substitué, ou benzyle qui peut être méthyl-, méthoxy-, halogéno- ou cyano-substitué,

w égale 1 ou 2,
x égale 1, 2 ou 3,
y égale 0, 1 ou 2,
z égale 0 ou 1.

2. Polyéthers suivant la revendication 1, caractérisés en ce que les diphénols sont le 2,2'-bis-(4-hydroxyphényl)propane, ou des sulfures de 4,4'-dihydroxydi-phényle à substitution alkylique en $C_1$-$C_4$ éventuelle.

3. Polyéthers suivant la revendication 1, caractérisés en ce que le composé halogéné est un dérivé de la pyridine qui comporte au moins un groupe nitrile.

4. Polyéthers suivant la revendication 1, caractérisés en ce que le composé halogéné est un dérivé du thiophène qui comporte au moins un groupe nitrile.

5. Polyéthers suivant la revendication 1, caractérisés en ce que le composé halogéné est un dérivé du benzène qui comporte au moins 2 groupes nitrile.

6. Polyéthers suivant la revendication 1, caractérisés en ce que le composé halogéné est un dérivé de la pyridine qui contient au moins un groupe arylthio.

7. Polyéthers suivant la revendication 1, caractérisés en ce que le composé halogéné est un dérivé du benzène qui comporte au moins un groupe nitrile et au moins un groupe arylthio.

8. Polyéthers suivant la revendication 1, caractérisés en ce que le composé halogéné est un dérivé de la pyrimidine.